# EUROPEAN PATENT APPLICATION

(11) **EP 2 896 296 A1**
(43) Date of publication of application: **22.07.2015**
(21) Application number: 14151819.1
(22) Date of filing: 20.01.2014
(51) Int. Cl.: A23G 1/21, A23G 1/54, A23G 3/20, A23G 3/28

(54) **An assembly and method for forming at least one patterned chocolate product with a patterned stencil layer**

(71) Applicant: Coertjens, Marijn, Sai Yin Pun, Hong Kong (CN)
(72) Inventor: Coertjens, Marijn, Sai Yin Pun, Hong Kong (CN)
(74) Representative: Plas, Axel Ivo Michel

(57) **Abstract**

Said assembly (1) comprises a patterned stencil layer (300), which comprises at least one patterned stencil shape (301) matching said at least one non-planar cast shape (202) of said mould (200), each patterned stencil shape (301) comprising a patterned stencil cut-out (302), and
said patterned stencil layer (300) is configured to be positioned in said mould (200) such that a sprayed edible compound pattern (101) is formed on said non-planar cast shape (202) of said mould (200) when an edible compound in its liquid state (102) is sprayed through said patterned stencil cut-out (302) of said patterned stencil shape (301).

## Description

### Field of the Invention

The present invention generally relates to an assembly and a related method to fabricate patterned chocolate products with a patterned stencil layer, obtained in at least two parts of chocolate of different colours, of which at least one of the parts can have decorative shape.

### Background of the Invention

EP1604573 discloses a method and the related device to make a hollow chocolate egg with a star shaped decoration of a different colour. A metered quantity of chocolate is deposited in a convex cast shape of a mould. The device described in EP1604573 first comprises a patterned stencil layer with a convex patterned stencil shape, which has a star-shaped patterned stencil cut-out which defines the pattern of the star-shaped decoration to be made. The patterned stencil layer extends between a mould face in contact with the mould and an opposite face at the top, and the star-shaped patterned stencil cut-out extends vertically completely through the patterned stencil layer from the mould face to the opposite product face. The device described by EP1604573 further comprises a convex stamp, with a star-shaped profile mating with the star-shaped stencil cut-out defined on the patterned stencil. The stamp has mating full parts, or parts in relief, which, when the patterned stencil shape and the stamp approach the convex cast shape of a mould, are made to cooperate so that the drop of chocolate previously cast in the convex cast shape of a mould is spread open to assume the star-shaped pattern thus defined. The stamp and the patterned stencil shape are pressed on the convex mould with a predetermined pressure, so as to cold mould the drop of chocolate. After a predetermined consolidation time, the stamp and the patterned stencil shape are removed from the mould, on the bottom of which the spot having the desired chocolate pattern remains deposited. The last steps provide to cool the chocolate pattern in a cooling tunnel to obtain the consolidation of thereof, and subsequently to couple it with the chocolate of different colour, this being accomplished in a conventional manner, in order to complete the half-shell. Finally, two half-shells are joined together in order to obtain the hollow chocolate product. While the method and the related device disclosed in EP1604573 allow the production of patterned chocolate eggs, the method and the related device present in practice a number of practical limitations.

The first step to produce the chocolate pattern normally provides to meter a suitable quantity of chocolate inside a convex cast shape of a mould. The actual thickness, and any variation in thickness, of the obtained chocolate pattern is then dependent on the operator's skill and on the determinate pressure. Also, the chocolate forming the spot must be close to its liquid state to be able to spread under the determinate pressure applied when the shell and the patterned stencil shape are closed together in the convex cast shape of the mould. The resolution of a chocolate pattern defined along the sidewall of the convex cash shape of the mould is then low. Indeed, a quantity of chocolate deposited not at the bottom of the convex cast shape of the mould will run down the sidewall of the convex cast shape until it reaches the bottom of the convex cast shape of the mould.

The method disclosed in EP1604573 does not allow to reach a high resolution when defining a complex chocolate pattern. For instance, when the quantity of chocolate forming the drop in the convex cast shape of the mould is not sufficient, the drop of chocolate will not spread enough to fill the pattern defined by the patterned stencil cut-out completely. The obtained chocolate pattern, due to the lack of sufficiently spread chocolate, faces the risk of not being accurately defined.

The invention described in EP1604573 comprises a patterned stencil layer comprising at least one patterned stencil shape, substantially convex in shape, and defining the pattern of the spot to be made. The definition of a complex pattern on the mould is hindered by the thickness of the vertical sidewalls of the patterned stencil shape. The vertical sidewalls of the patterned stencil shape ensure the guidance of the stamp when the stamp slides in the patterned stencil layer when applying pressure on the chocolate drop. This prevents the stamp from moving when positioned in the patterned stencil layer and guarantees the alignment between the star-shaped profile of the stamp and the star-shaped stencil cut-out defined on the patterned stencil.

Another limitation of the method disclosed in EP1604573 is that the chocolate pattern defined at the bottom of the convex cast shape of the mould can be damaged when removing the patterned stencil layer and the shell from the mould. Indeed, after applying pressure on the drop of chocolate and waiting for a determinate consolidation time, the patterned stencil shape and the shell are removed from the mould. When removing the patterned stencil shape and the shell from the mould, it is possible that the chocolate pattern is damaged, and/or that the edges of the chocolate pattern that were overlapping with the patterned stencil layer are removed. Indeed, the surface of the chocolate in contact with the mould is equal to the surface of the chocolate is contact with the stamp. When removing the stamp and the patterned stencil layer from the mould, the risk is high that the chocolate pattern remains on the stamp instead of remaining on the mould.

It is an objective of the present invention to disclose an assembly and method that overcome the above identified shortcomings of existing tools. More particularly, it is an objective to disclose such an assembly and method for accurately defining a customizable pattern of a first colour as part of at least one patterned chocolate product of a second colour.

### Summary of the Invention

According to a first aspect of the present invention, the above defined objectives are realized by an assembly for forming at least one patterned chocolate product cast in a mould comprising a non-planar cast shape for each of the at least one patterned chocolate products, CHARACTERIZED IN THAT the assembly comprises a patterned stencil layer, which comprises at least one patterned stencil shape matching the at least one non-planar cast shape of the mould, each patterned stencil shape comprising a patterned stencil cut-out, and the patterned stencil layer is configured to be positioned in the mould such that a sprayed edible compound pattern is formed on the non-planar cast shape of the mould when an edible compound in its liquid state is sprayed through the patterned stencil cut-out of the patterned stencil shape.

As the edible compound in its liquid state is sprayed through the patterned stencil cut-out on the mould, a matching patterned stamp is no longer needed, which therefore leads to a less complex setup and reduces the associated risk of damage to the pattern. Further, as a patterned stamp is no longer needed to be securely guided in the matching patterned stencil, the layer thickness and material of the patterned stencil layer can now be freely chosen, which facilitates the implementation of more complex patterns. By spraying the edible compound on the mould, measuring the amount of edible compound becomes less complex. Indeed, the sprayed edible compound is substantially evenly dispersed over the patterned stencil cut-out as the method becomes independent from a determinate pressure applied by the operator on the edible compound. The edible compound pattern will be completely created, even for varying quantities of edible compound. A variation in the quantity of edible compound will only influence the layer thickness and not the required dispersion over the entire pattern. Additionally, positioning the stencil shape in the non-planar mould and spraying through the patterned stencil cut-out on the mould improves the quality, the smoothness, the glossiness and the shininess of the side of the edible compound pattern in contact with the non-planar cast shape of the mould. Also, the patterned stencil shape matches the non-planar shape of the mould more securely and reliably, which improves the precision of the created pattern. For example, the risk of spillage or imperfections at the edges are reduced thanks to the fact that the patterned stencil shape more securely matching the non-planar shape of the mould. A technique of spraying an edible compound on a finished chocolate product in order to create an edible pattern compound is known. In that case, the patterned stencil layer is positioned on the finished chocolate product and the edible compound is subsequently sprayed on the chocolate product. The quality and precision of the created edible compound pattern will then be less shiny and glossy because of the effect of the sprayed droplets on top of the chocolate product, and because of the inherent tolerances on the non-planar shape of a chocolate product which will result in a less precise match with the corresponding shape of the stencil layer.

According to an optional embodiment, the assembly is further characterized in that the patterned stencil layer extends between a mould face and an opposite product face and that the patterned stencil cut-out extends completely through the patterned stencil layer from the mould face to the opposite product face.

This way, the sprayed edible compound pattern is directly sprayed on the mould and not on the chocolate product. By spraying the edible compound on the mould, measuring the amount of edible compound becomes less complex. Indeed, the sprayed edible compound is substantially evenly dispersed over the patterned stencil cut-out. The edible compound pattern will be completely created, even for varying quantities of edible compound, independently from a determinate pressure applied by the operator on the edible compound. A variation in the quantity of edible compound will only influence the layer thickness and not the required dispersion over the entire pattern. Additionally, positioning the stencil shape in the non-planar mould and spraying through the patterned stencil cut-out on the mould improves the quality, the smoothness, the glossiness and the shininess of the side of the edible compound pattern in contact with the non-planar cast shape of the mould. Techniques of spraying an edible compound on a finished chocolate product in order to create an edible pattern compound are known. In that case, the patterned stencil layer is positioned on the finished chocolate product and the edible compound is subsequently sprayed on the chocolate product. The quality and precision of the created edible compound pattern will then be less shiny when the edible compound is sprayed on the finished chocolate product because of the effect of the sprayed droplets on top of the chocolate product, and because of the inherent tolerances on the non-planar shape of a chocolate product which will result in a less precise match with the corresponding shape of the stencil layer.

According to an optional embodiment, the assembly is further characterized in that the mould face of the patterned stencil shape touches the matching non-planar cast shape of the mould when positioned in the mould.

This way, the patterned stencil shape matches the non-planar shape of the mould in which it is positioned more securely and reliably, which improves the precision of the created pattern. For example, the risk of spillage or imperfections at the edges are reduced thanks to the fact that the patterned stencil shape matches the non-planar shape of the mould more securely.

According to an optional embodiment, the assembly is further characterized in that the layer thickness of the patterned stencil shape is smaller than a predefined layer thickness threshold.

This way, a higher resolution of the definition of the sprayed edible compound pattern is achievable as the patterned stencil shape follows the non-planar cast shape of the mould in which it is positioned. No material forming the patterned stencil layer hinders the spraying of the edible compound. The patterned thickness layer is preferably designed thin enough to achieve high spraying resolutions. It is also preferably designed thick enough to be made re-usable and to be able to withstand washing in e.g. a washing machine. The fact that the patterned stencil layer can be re-used several times prevents waste of the material used to form the patterned stencil layer. Spraying an edible compound pattern thinner than the thickness of the patterned stencil shape finally prevents the obtained edible compound pattern from being damaged when removing the patterned stencil layer from the mould. Indeed, as the edible compound sprayed on the mould through the patterned stencil cut-out of the patterned stencil layer does not overlap with the edges of the patterned stencil cut-out, the obtained edible compound pattern is not damaged when the patterned stencil shape is removed from the non-planar cast shape of the mould.

According to an optional embodiment, the assembly is further characterized in that the predefined layer thickness threshold is defined by one or more of the following ranges:
- smaller than 80% of the depth of the mould, preferably 50%;
- smaller than 2mm, preferably smaller than 1 mm;
- greater than the thickness of the sprayed edible compound pattern when formed on the mould.

This way, a higher resolution of the definition of the sprayed edible compound pattern is achievable as the patterned stencil shape follows the non-planar cast shape of the mould in which it is positioned. No material forming the patterned stencil layer hinders the spraying of the edible compound. The patterned thickness layer is preferably designed thin enough to achieve high spraying resolutions. It is also preferably designed thick enough to be made re-usable and to be able to withstand washing in e.g. a washing machine. The fact that the patterned stencil layer can be re-used several times prevents waste of the material used to form the patterned stencil layer. Spraying an edible compound pattern thinner than the thickness of the patterned stencil shape finally prevents the obtained edible compound pattern from being damaged when removing the patterned stencil layer from the mould. As the thickness of the edible compound pattern is smaller than the thickness of the patterned stencil layer, the edges of the edible compound pattern are not pulled out of the non-planar cast shape of the mould when the patterned stencil shape is removed from the non-planar cast shape of the mould. Indeed, as the edible compound sprayed on the mould through the patterned stencil cut-out of the patterned stencil layer does not overlap with the edges of the patterned stencil cut-out, the obtained edible compound pattern is not damaged when the patterned stencil shape is removed from the non-planar cast shape of the mould.

According to an optional embodiment, the assembly is further characterized in that the layer thickness of the patterned stencil shape is substantially uniform.

This way, a higher resolution of the definition of the sprayed edible compound pattern is achievable as the patterned stencil shape follows the non-planar cast shape of the mould in which it is positioned. No material forming the patterned stencil layer hinders the spraying of the edible compound. Also, a higher complexity of the patterned stencil layer is allowed thanks to the uniform thickness layer.

According to an optional embodiment, the assembly is further characterized in that the patterned stencil layer comprises rims connected to the patterned stencil shape, the rims are configured to correctly position the patterned stencil shape in the non-planar cast shape of the mould.

The combination of the rims of the patterned stencil layer and of the patterned stencil shape of the patterned stencil layer ensures the patterned stencil shape is correctly positioned in the non-planar cast shape of the mould. This way, no glue or any other means are needed to maintain the patterned stencil cut-out in the non-planar shape of the mould. This way, the method of fabrication of chocolate products with an accurately defined customizable pattern of a first colour as part of at least one patterned chocolate product of a second colour is made less complex when compared with the prior art disclosed in EP1604573, as no stamp nor a patterned stencil shape with vertical sidewalls are needed.

According to an optional embodiment, the assembly is further characterized in that the mould comprises a plurality of non-planar cast shapes and that the patterned stencil layer comprises a plurality of patterned stencil shapes and rims.

The combination of the rims of the patterned stencil layer and of the plurality of patterned stencil shape ensures that the patterned stencil shapes are correctly positioned in the non-planar shapes of the mould. This way, no glue or any other means are needed to maintain the patterned stencil cut-outs in the non-planar shapes of the mould. This way, the efficiency of the fabrication of decorated and customized chocolate products is improved as several chocolate products can be simultaneously fabricated. This way, the method of fabrication of chocolate products with an accurately defined customizable pattern of a first colour as part of at least one patterned chocolate product of a second colour is also made less complex when compared with the prior art disclosed in EP1604573, as no stamp nor a patterned stencil shape with vertical sidewalls are needed.

According to an optional embodiment, the assembly is further characterized in that the assembly further comprises the mould.

According to a second aspect of the invention, there is a method of forming at least one patterned chocolate product, the method comprising:
- providing a mould comprising at least one non-planar cast shape for each of the at least one patterned chocolate products;
- positioning in the mould a patterned stencil layer, which comprises at least one patterned stencil shape matching the at least one non-planar cast shape of the mould, each patterned stencil shape comprising a patterned stencil cut-out; and
- forming a sprayed edible compound pattern on the non-planar cast shape of the mould by spraying an edible compound in its liquid state through the patterned stencil cut-out of the patterned stencil shape.

As the edible compound in its liquid state is sprayed through the patterned stencil cut-out on the mould, a matching patterned stamp is no longer needed, which therefore leads to a less complex setup and reduces the associated risk of damage to the pattern. Further, as a patterned stamp is no longer needed to be securely guided in the matching patterned stencil, the layer thickness and material of the patterned stencil layer can now be freely chosen, which facilitates the implementation of more complex patterns. By spraying the edible compound on the mould, measuring the amount of edible compound becomes less complex. Indeed, the sprayed edible compound is substantially evenly dispersed over the patterned stencil cut-out as the method becomes independent from a determinate pressure applied by the operator on the edible compound. The edible compound pattern will be completely created, even for varying quantities of edible compound. A variation in the quantity of edible compound will only influence the layer thickness and not the required dispersion over the entire pattern. Additionally, positioning the stencil shape in the non-planar mould and spraying through the patterned stencil cut-out on the mould improves the quality, the smoothness, the glossiness and the shininess of the side of the edible compound pattern in contact with the non-planar cast shape of the mould. Also, the patterned stencil shape matches the non-planar shape of the mould more securely and reliably, which improves the precision of the created pattern. For example, the risk of spillage or imperfections at the edges are reduced thanks to the fact that the patterned stencil shape more securely matching the non-planar shape of the mould. A technique of spraying an edible compound on a finished chocolate product in order to create an edible pattern compound is known. In that case, the patterned stencil layer is positioned on the finished chocolate product and the edible compound is subsequently sprayed on the chocolate product. The created edible compound pattern will then be less shiny and glossy because of the effect of the sprayed droplets on top of the chocolate product, and the precision and the quality of the created edible compound pattern will be lowered because of the inherent tolerances on the non-planar shape of a chocolate product which will result in a less precise match with the corresponding shape of the stencil layer.

According to an optional embodiment, the method comprises the further step of allowing the sprayed edible compound pattern to set by a transition from its liquid state to its solid state.

This way, the sprayed edible compound pattern crystallizes and solidifies on the mould. Spraying an edible compound pattern in its liquid state in form of droplets that solidify when coming in contact with the mould allows to accurately define edible compound patterns along the sidewall of the non-planar cast shape of the mould. When compared to the prior art disclosed in EP1604573, the edible compound quickly crystallizes on the sidewalls of the non-planar cast shape of the mould without the risk of running along the sidewall. A higher resolution of the edible compound pattern is then achievable. Also, the transition from liquid state to solid state of the sprayed edible compound improves the adhesion of the sprayed edible compound pattern to the non-planar cast shape of the mould. When the patterned stencil shape is removed from the non-planar cast shape of the mould, the edible compound pattern is not damaged and stays in the non-planar cast shape of the mould.

According to an optional embodiment, the method comprises the further step of removing the patterned stencil shape of the patterned stencil layer from the non-planar cast shape, leaving the sprayed edible compound pattern in said non-planar cast shape.

This way, no human intervention in the vicinity of the sprayed edible compound pattern is needed to remove the patterned stencil layer from the mould. This prevents any damage from being generated on the sprayed edible compound pattern when removing the patterned stencil layer from the mould. A much higher resolution of customizable patterns is then achievable.

According to an optional embodiment, the method comprises the further step of casting a chocolate compound in its liquid state in the non-planar cast shape, thereby covering the sprayed edible compound pattern.

This way, the chocolate compound is cast such that the surface of the chocolate product in contact with the mould is in line with the sprayed edible compound pattern. This ensures a shiny, glossy and smooth effect of the final chocolate product. It also allows to create a chocolate product decorated with patterns of different colours.

According to an optional embodiment, the method comprises the further step of allowing the chocolate compound in its liquid state to set, thereby creating the chocolate product.

This way, the chocolate compound quickly crystallizes. The transition from liquid state to solid state of the chocolate compound improves the adhesion of the sprayed edible compound pattern to the chocolate compound, up to the point that the adhesion of the sprayed edible compound pattern to the chocolate compound is higher than the adhesion of the sprayed edible compound pattern to the mould. When the chocolate product is unmoulded, the sprayed edible compound pattern and the chocolate compound are then simultaneously removed from the mould.

According to an optional embodiment, the method comprises the further step of removing any excess of the chocolate compound in its liquid state from the mould.

This way, any excess of the chocolate compound is removed from the top planar surface of the mould. If a chocolate product comprising a non-planar cast shape is joined to another chocolate product comprising a non-planar cast shape, removing any excess of chocolate compound ensures that the junction between the two chocolate products is smooth.

According to an optional embodiment, the edible compound has a melting point in the range of 5°C to 50°C, preferably between 15°C and 50°C.

This way, the edible compound is sprayed in its liquid state through the patterned stencil cut-out in the non-planar shape of the mould, in the form of droplets. When the droplets of the edible compound come in contact with the non-planar cast shape of the mould, the edible compound quickly crystallizes and sets on the mould by a transition from its liquid state to its solid state. The viscosity of the edible compound at this temperature is compatible with a spraying technique, which allows the edible compound in its liquid state it to be sprayed on the mould.

According to an optional embodiment, the edible compound is sprayed on the mould with use of compressed air, where the edible compound is sprayed in form of droplets with a diameter between 0.5 and 250 micrometres, preferably with a diameter lower than 100 micrometres.

This way, the definition of the sprayed compound pattern is accurate and the resolution of the sprayed compound pattern is high. Also, the spraying of the edible compound ensures a shiny, glossy and smooth effect of the final chocolate product.

According to an optional embodiment, the colour of the chocolate compound is different from the colour of the sprayed edible compound pattern.

This way, the chocolate product is characterized in that two different colours can easily be realised on its surface, as it only requires one stencil and one spraying step.

According to an optional embodiment, the chocolate compound is cast such that the surface of the chocolate product in contact with the mould is in line with the sprayed edible compound pattern.

This ensures a smooth transition between the chocolate compound and the sprayed edible compound pattern at the surface of the final chocolate product.

According to an optional embodiment, the method comprises the further step of:
- positioning in the mould a further patterned stencil layer, which comprises at least one further patterned stencil shape matching at least one non-planar cast shape of the mould, each further patterned stencil shape comprising a further patterned stencil cut-out ; and
- forming a further sprayed edible compound pattern on the non-planar cast shape of the mould by spraying a further edible compound in its liquid state through the further patterned stencil cut-out of the further patterned stencil shape.

This way, the chocolate product is characterized in that more than two identical or different patterns of identical of different colours can easily be realized on its surface, as it only requires two stencils and two spraying steps.

According to an optional embodiment, the method comprises the further step of unmoulding the chocolate product from the mould.

This way, the chocolate product is removed from the mould, and comprises the sprayed edible compound pattern defined in line with the chocolate compound.

According to an optional embodiment, the method comprises the further step of joining a plurality of the patterned chocolate products.

This way, several patterned chocolate products can be joined together to form a new chocolate product comprising several sprayed edible compound patterns of different shapes and/or different colours.

### Brief Description of the Drawings

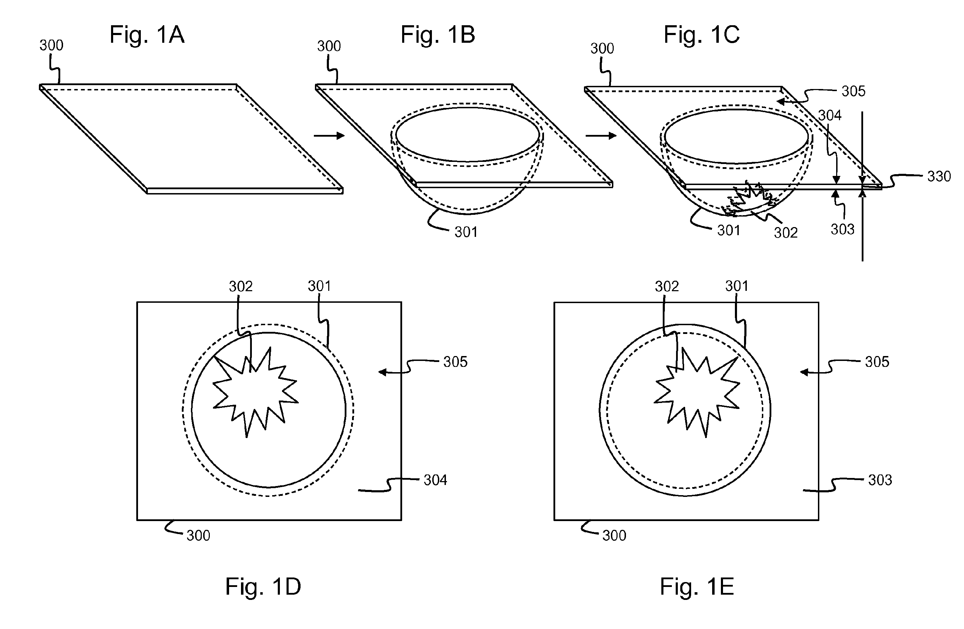

Fig. 1A to Fig. 1E schematically illustrate an embodiment of a patterned stencil layer comprising a patterned stencil cut-out for forming at least one patterned chocolate product cast in a mould, respectively as a stencil layer in perspective view Fig. 1A, as a stencil layer with a stencil shape in perspective view Fig. 1B, as a patterned stencil layer with a patterned stencil cut-out in perspective view Fig. 1C, in top view of the patterned stencil layer where the patterned stencil shape is concave Fig. 1D and in bottom view of the patterned stencil layer where the patterned stencil shape is convex Fig. 1 E;

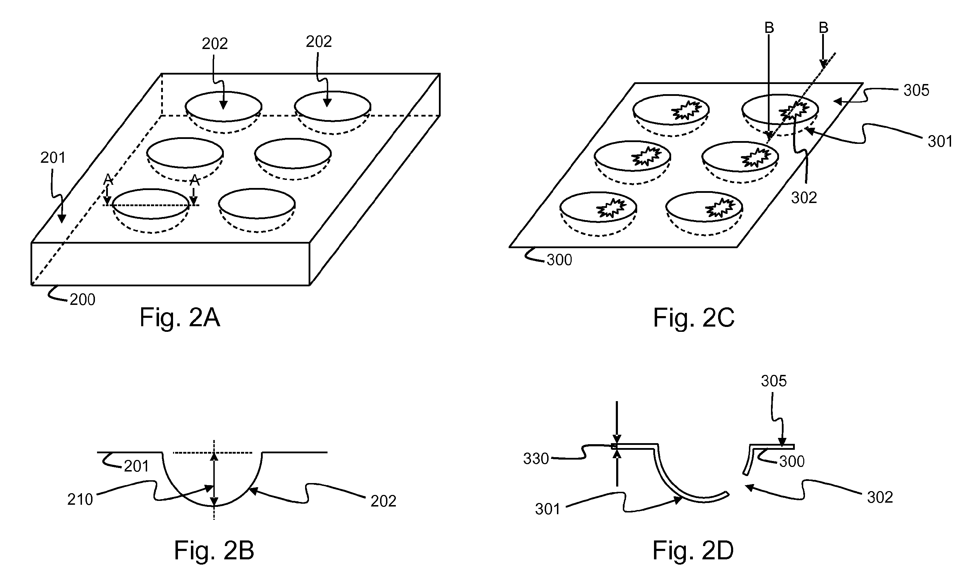

Fig. 2A to Fig. 2D respectively schematically illustrate an embodiment of a mould in perspective view Fig. 2A, a cross-section of a non-planar cast shape of the mould along the axis AA in Fig. 2B, a patterned stencil layer in perspective view Fig. 2C and a cross-section of a patterned stencil layer along the axis BB Fig. 2D;

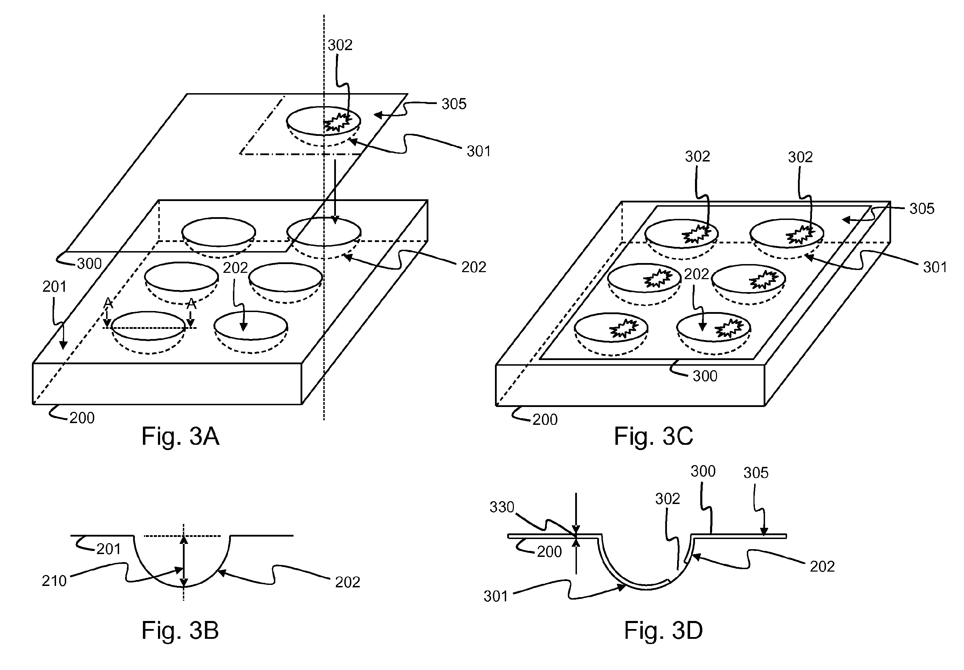

Fig. 3A to Fig. 3D respectively schematically illustrate an embodiment of a patterned stencil layer positioned above a mould in perspective view Fig. 3A, of a cross-section of a non-planar cast shape of the mould along the axis AA Fig. 3B, of the patterned stencil layer positioned in the mould in perspective view Fig. 3C, of a cross-section of one patterned stencil shape of the patterned stencil layer positioned in the mould Fig. 3D;

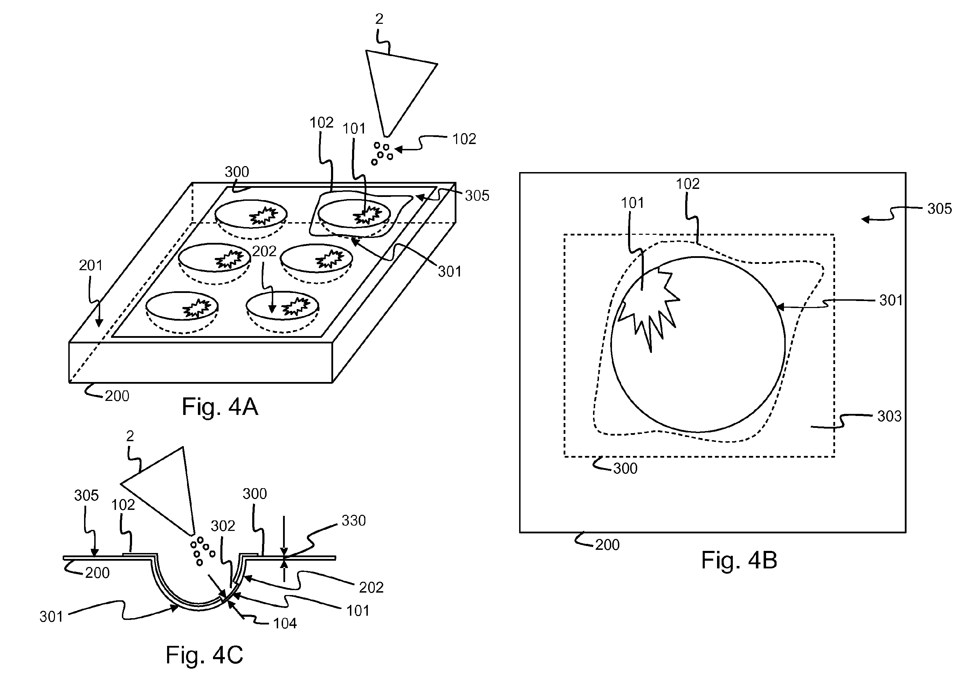

Fig. 4A to Fig. 4C respectively schematically illustrate an embodiment of a sprayed edible compound on a non-planar cast shape of a mould through a patterned stencil layer in perspective view Fig. 4A, of a bottom view of the non-planar cast shape of the mould and the patterned stencil layer positioned in the mould after spraying the edible compound Fig. 4B, of a cross-section of the non-planar cast shape and the patterned stencil layer after spraying the edible compound on the mould Fig. 4C;

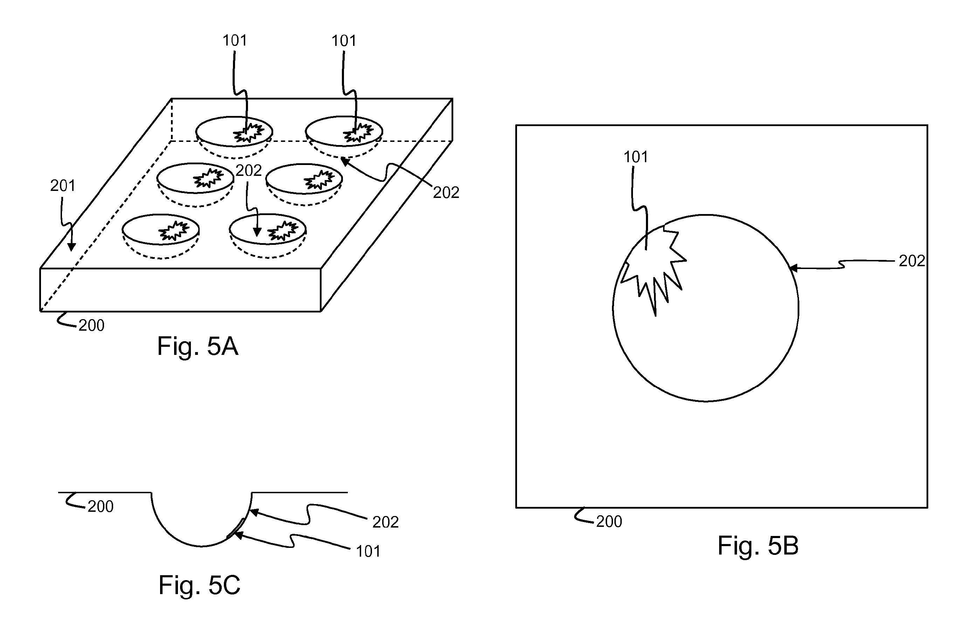

Fig. 5A to Fig. 5C schematically illustrate am embodiment of an edible patterned compound on a mould, with respectively a perspective view Fig. 5A of the edible patterned compound on the mould, with a bottom view of the non-planar cast shape of the mould and the edible patterned compound Fig. 5B, and with a cross-section of the edible patterned compound left on the non-planar cast shape of the mould Fig. 5C;

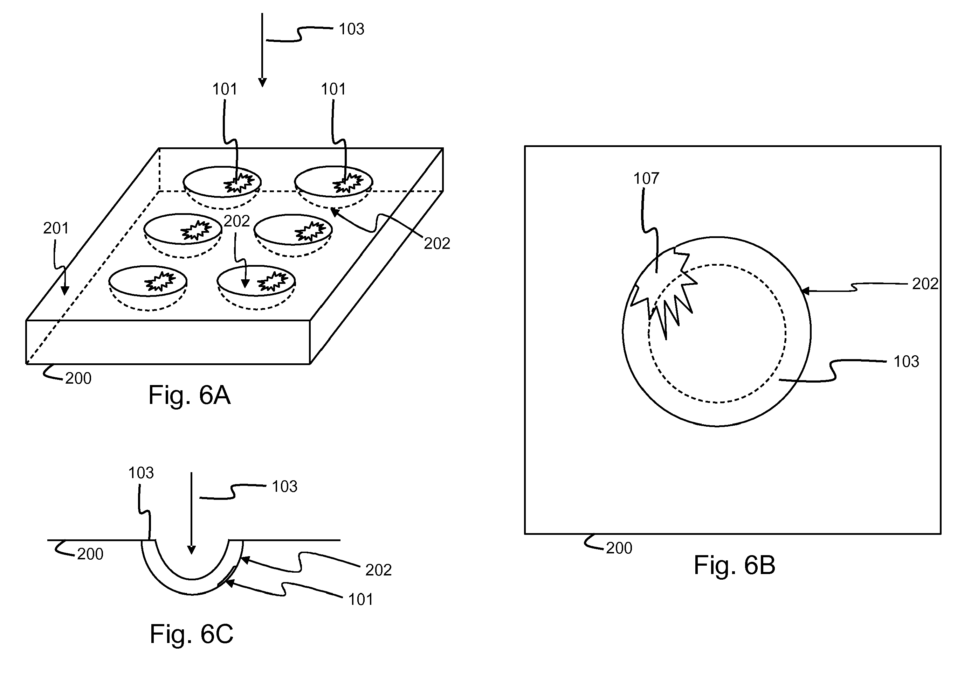

Fig. 6A to Fig. 6C respectively schematically illustrate an embodiment of a chocolate compound poured in a mould over an edible patterned compound in perspective view Fig. 6A, with a bottom view of the non-planar cast shape of the mould and the edible patterned compound and the chocolate compound Fig. 6B, and with a cross-section of the edible patterned compound covered by the poured chocolate compound in the mould Fig. 6C;

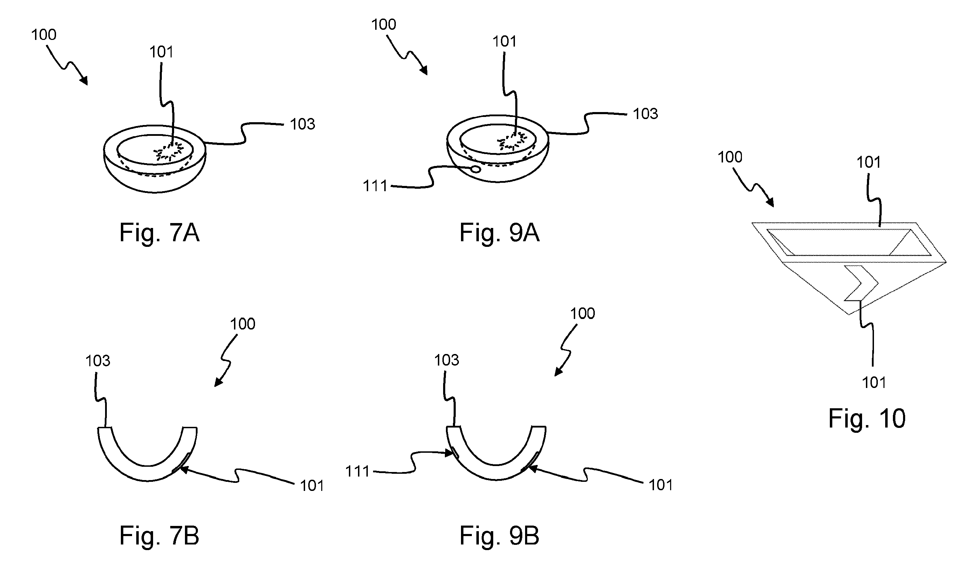

Fig. 7A to Fig. 7B respectively schematically illustrate an embodiment of an unmoulded chocolate product presenting an in-line pattern of a second colour in perspective view Fig. 7A and in cross-section Fig. 7B;

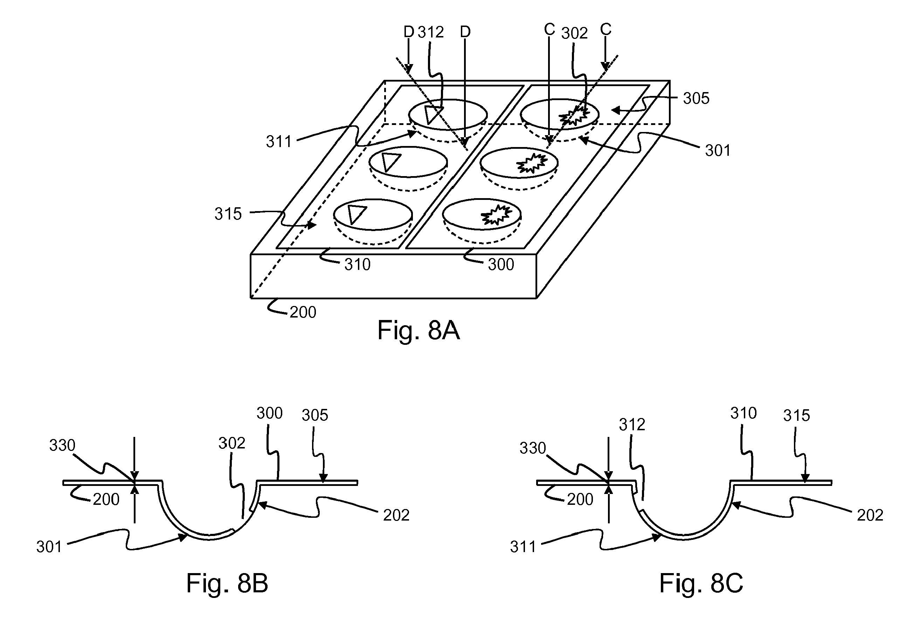

Fig. 8A to Fig. 8C respectively schematically illustrate an alternative embodiment of two patterned stencil layers characterized by two different patterned stencil cut-outs in perspective view Fig. 8A, and a cross-section of a first patterned stencil layer Fig. 8B and a cross-section of a second patterned stencil layer Fig. 8C non identical to the first patterned layer; and
Fig. 9A to Fig. 9B respectively schematically illustrate an alternative embodiment of an unmoulded chocolate product of one colour presenting two in-line patterns of a second colour and a third colour respectively in perspective view Fig. 9A and in cross-section view Fig. 9B.
Fig. 10 schematically illustrates an alternative embodiment of an unmoulded chocolate product of one colour, characterized in that its shape comprises angled sections, presenting one in-line pattern of a second colour in perspective view.

### Detailed Description of Embodiment(s)

According to an embodiment shown in Fig. 2A, the mould 200 comprises a top planar surface 201 and at least one non-planar cast shape 202. As shown, such non-planar cast shape 202 can be for instance half of a sphere. However it is clear that alternative non-planar cast shapes 202 are possible, for instance another part of a sphere, a part of a spheroid, or any other suitable cast receptacle comprising at least one curved section. According to still further alternatives the non-planar cast shape 202 could comprise a plurality of angled planes, such as for example a cast receptacle shaped as a part of a cube, a part of a parallelepiped, a part of a tetrahedron, dodecahedron, icosahedron, or any other suitable polyhedron, etc. It is clear that alternative non-planar cast shapes 202 are possible comprising a combination of curved and angled sections, such as cast receptacles for a predetermined figurine, as will be explained with reference to Fig. 10. As shown in Figure 2A the mould comprises six such non-planar cast shapes 202, which are formed as half of a sphere. According to alternative embodiments other identical non-planar cast shapes 202 can be repeated on the mould 200. It is clear that according to still further alternative embodiments a different number of planar cast shapes 202 can be repeated in the mould 200. The mould 200 then comprises a plurality of identical non-planar cast shapes 202, for example, the mould 200 can comprise 24 or 28 or any other suitable number of repetitions of identical non-planar cast shapes 202. According to still further alternative embodiments of the mould, also a plurality of non-identical non-planar cast shapes 202 can be present and repeated on the mould 200. Alternatively the mould 200 could also comprise a single non-planar cast shape 202, as long as in general the mould 200 comprises at least one non-planar cast shape 202 that serves as a cast receptacle. A cross-section of the non-planar cast shape 202 transverse to the top planar surface 201 along the axis AA is depicted in Fig. 2B and Fig. 3B. As shown, the depth 210 of the non-planar cast shape 202 is measured perpendicular to the top planar surface 201 of the mould 200 as the longest transverse distance between the top planar surface 201 and a point of the non-planar cast shape 202.

Fig. 1A-E schematically illustrates a method of manufacturing of a patterned stencil layer 300. Such patterned stencil layer 300 cooperates with the mould 200 for forming at least one patterned chocolate product 100 cast in the mould 200 as will be explained in more detail below. Fig. 1A schematically illustrates the layer for manufacturing the patterned stencil layer 300 comprising a thickness 330. The layer 300 is for example made of e.g. in a food-compatible polymer material, a polycarbonate material, a thermo-formable material, inox, in a Teflon or Polytetrafluoroethylene layer, in silicone, in high-density polyethylene, in low-density polyethylene, or in polypropylene, etc. The layer is for example a thermo-formable food-compatible polymer material with a thickness 330 of 0.5mm. In Fig. 1B, a patterned stencil shape 301 is formed in the layer 300, for example by means of thermoforming. Subsequently as shown in Fig. 1C, a patterned stencil cut-out 302 is defined in the patterned stencil shape 301 of the layer 300, thereby creating a patterned stencil layer 300. The patterned stencil cut-out 302 can be formed by cutting this pattern out of the patterned stencil shape 301, for example by laser cutting or by pressure-saw cutting of the patterned stencil shape 301. According to an alternative method of manufacturing the patterned stencil shape 301 could be manufactured by means of 3D printing techniques. According to still further methods of manufacturing, first the patterned stencil cut-out 302 is punched, stamped or cut out of the layer 300 and subsequently the stencil shape 301, already comprising the cut-out 302 if formed by pressing the layer 300 into a suitable mould. It is clear that still further alternative embodiments are possible for manufacturing the patterned stencil layer 300. The thickness 330 of the layer 300 should be sufficiently large such that the patterned stencil shape 301 does not deform considerably during repeated use and subsequent cleaning operations, however the thickness 330 is preferably lower than a predetermined thickness threshold, as this is advantageous during the spraying operation as will be explained with reference to Figures 4A-C. Therefore the predefined thickness threshold for the thickness 330 of the layer 300 is for example smaller than 2mm, preferably smaller than 1mm. This is for example the case when used in combination with a mould comprising at least one non-planar cast shape 202 with a maximum depth of a few centimetres, for example 2cm to 10cm. However also larger cast shapes could be realised and in general, in order to facilitate the spraying operation, the predefined thickness threshold is preferably smaller than 80% of the depth 210 of the mould 200, preferably smaller than 50% of the depth 210 of the mould 200, such as for example 5% to 10% of the depth 210 of the mould. The face of the patterned stencil layer 300, as will be explained with reference to Figure 3C, that will contact the mould 200 is referred to as mould face 303, while the face of the patterned stencil layer 300 that will contact the chocolate product is referred to as the opposite product face 304.

As shown in the embodiment of Fig. 1A-E, the thickness 330 of the layer 300 is substantially uniform over the patterned stencil shape 301. This means that along the patterned stencil shape 301, the distance between the mould face 303 and the opposite product face 304 is constant. Such a layer 300 is suitable for the manufacturing steps, such as for example shaping operations such as thermoforming a suitable plastic, or shaping metal by means of a stamping press and cutting operations such as for example laser cutting, saw cutting, stamping, punching, etc. According to alternative embodiments however the thickness 330 could be nonuniform.

As shown in the embodiment of Fig. 1A-E, the patterned stencil cut-out comprises a star like shape, however according to alternative embodiments the patterned stencil cut-out 302 can comprise any desired shape. The complexity and the resolution of the details of the patterned stencil cut-out 302 depend on the achievable resolution of the technique used to create the patterned stencil cut-out 302 in the patterned stencil shape 301. As shown, the patterned stencil cut-out 302 comprises a single pattern. However, according to alternative embodiments, the patterned stencil cut-out could comprise a plurality of distinct patterns cut out of the same patterned stencil shape 301, such as for example a star shaped pattern and a distinct circular shaped pattern as will be explained with reference to Fig. 9A-B, or any other suitable combination of a plurality of shapes. As shown in Fig. 1C and also visible in the cross-section of Fig. 2D the patterned stencil cut-out 302 extends completely through the patterned stencil layer 300, from the mould face 303 to the opposite product face 304. Fig. 1D further shows a top view from the product face 304 of the patterned stencil layer 300 of Fig. 1C and Fig. 1E shows a bottom view from the mould face 303 of the patterned stencil layer 300 of Fig. 1C.

According to the embodiment shown in Fig. 1C, the patterned stencil layer 300 comprises rims 305 connected to the patterned stencil shape 301. The rims 305 are configured to correctly position the patterned stencil shape 301 in the non-planar cast shape 202 of the mould 200, as will be explained with reference to Fig. 3C, where the rims 305 are depicted as being parallel to the top planar surface 201 of the mould 200. According to alternative embodiments, the patterned stencil layer 300 comprises a patterned stencil shape 301 but does not comprise rims 305. According to other alternative embodiments, the patterned stencil layer 300 comprises at least one patterned stencil shape 301 and rims 305, where said rims 305 are not parallel to the top planar surface 201 of the mould 200.

According to an embodiment shown in Fig. 2A, the mould 200 comprises six non-planar cast shapes 202. In Fig. 2C, the patterned stencil layer 300 comprises rims 305 and six patterned stencil shapes 301 matching the non-planar cast shapes 202 of the mould 200 as will be explained with reference to Fig. 3C, and comprising six identical patterned stencil cut-outs 302. These patterned stencil shapes 301 can be manufactured generally in a similar way as explained above for a stencil layer 300 with only one patterned stencil shape 301, The patterned stencil shapes 301 presented in Fig. 2C are identical star-shaped patterned stencil shapes 301, but according to alternative embodiments, non-identical patterned stencil shapes 301 matching non-planar cast shapes 202 of the mould 200 can also be present and repeated on the same patterned stencil layer 300, as long as the patterned stencil shapes 301 of the patterned stencil layer 300 match the non-planar cast shapes 202 of the mould 200. According to further alternative embodiments, the patterned stencil layer 300 can also comprise a plurality of patterned stencil shapes 301 comprising non-identical patterned stencil cut-outs 302.

As shown in Fig. 2C, the rims 305 connect six patterned stencil shapes 301 and are configured to correctly position the six patterned stencil shapes 301 in the non-planar cast shapes 202 of the mould 200 as will be explained with reference to Fig. 3C. The cross-section of one patterned stencil shape 301 of the patterned stencil layer 300 transverse to the top planar surface 201 of the mould 200 along the axis BB, visible in Fig. 2C, is depicted in Fig. 2D. In the cross-section of Fig. 2D, it is clear that one patterned stencil cut-out 302 extends completely through the patterned stencil layer 300, from the mould face 303 to the opposite product face 304. According to alternative embodiments, the patterned stencil cut-out 302 could comprise a plurality of distinct patterns cut out of the same patterned stencil shape 301, such as for example a star shaped pattern and a distinct circular shaped pattern as will be explained with reference to Fig. 9A-B, or any other suitable combination of a plurality of shapes.

During the first step of the manufacturing process of the patterned chocolate product 100, as shown in Fig. 3A, the patterned stencil layer 300 of the embodiment of Fig. 2C, comprising six patterned stencil shapes 301 comprising six identical patterned stencil cut-outs 302 is positioned above the six matching non-planar cast shapes 202 of the mould 200 of the embodiment of Fig. 2A and lowered until the mould face 303 of the patterned stencil shapes 301 touches the matching non-planar cast shapes 202 of the mould 200 when positioned in said mould 200 as depicted in Fig. 3C. For clarity reasons, only one patterned stencil shape 301 of the patterned stencil layer 300 is depicted in Fig. 3A, but it is understood that the patterned stencil layer 300 presented in Fig. 3A is identical to the patterned stencil layer 300 presented in Fig. 2C and comprises six identical patterned stencil shapes 301. A cross-section of the patterned stencil layer 300 positioned in the non-planar cast shape 202 of the mould 200 is illustrated in Fig. 3D. The patterned stencil shapes 301 perfectly fit in the corresponding non-planar cast shapes 202 of the mould 200. As shown in Fig. 3C the rims 305 are parallel to and contacting with the top planar surface 201 of the mould 200. In this way the rims 305 and the connected patterned stencil shapes 301 cooperate to correctly and securely position the patterned stencil shapes 301 in the corresponding cast shapes 202 without requiring additional positioning and securing means. According to other alternative embodiments, the patterned stencil layer 300 could comprise a plurality of patterned stencil shapes 301 and rims 305 which are not parallel to the top planar surface 201 of the mould 200, but are also able to securely position the patterned stencil shapes 301 with respect to the cast shapes 202.

During a subsequent step in the manufacturing process of the patterned chocolate product, as shown in Fig. 4A, an edible compound in its liquid state 102 is sprayed out of a suitable spraying nozzle 2 on the mould 200 of the embodiment of Fig. 2A, through the patterned stencil cut-out 302 of a patterned stencil shape 301 of the embodiment of Fig. 2C, when the patterned stencil layer 300 is positioned in the non-planar cast shape 202 of the mould 200. Thereby a sprayed edible compound pattern 101 is created on the mould 200. Although in Fig. 4A a single spraying nozzle 2 is shown for spraying through a single stencil cut-out 302, according to alternative embodiments, the edible compound in its liquid state 102 is sprayed on the mould 200 from one or more spraying nozzles through the patterned stencil cut-outs of a plurality of patterned stencil shapes 301 of the patterned stencil layer 300.

The edible compound 102, which is sprayed out of the spraying nozzle 2 comprises for instance cocoa butter, which is an edible vegetable fat extracted from the cocoa bean. According to alternative embodiments, the edible compound 102 further comprises for instance a mixture obtained from cocoa products and sugars, e.g. a mixture of a food-compatible colorant and cocoa butter, or a mixture of chocolate derived mainly from dry cocoa solids and cocoa butter, or a mixture of a food-compatible colorant and chocolate derived mainly from dry cocoa solids and cocoa butter. In order to facilitate fabrication of the sprayed pattern at room temperature, the edible compound 102 preferably has a melting point in the range of 15 °C to 50°C and the viscosity of the edible compound pattern 102 at this temperature is compatible with a spraying technique, which allows the edible compound 102 to be sprayed on the mould 200. The presence of cocoa butter in the edible compound 102 is beneficial for the adhesion of the sprayed edible compound pattern 101 to the mould 200 and the high proportion of saturated fats from the cocoa butter further ensures a final shining, glossy and smooth effect of the sprayed edible compound pattern 101. However it is clear that alternative edible compounds 102 which can be suitably sprayed out of the spraying nozzle 2 in their liquid state and are able to subsequently crystallize on the mould.

The sprayed edible compound 102 is sprayed on the mould 200. The process of forming a spray is known as atomization. A spraying nozzle 2 is the device used to generate a spray and that is for instance a mixture of the edible compound 102 in its liquid state propelled by means of compressed air. The sprayed edible compound in its liquid state 102 is then projected out of one or more small nozzle apertures and emerges as a mist. The sprayed edible compound in its liquid state 102 is then suspended as very fine particles or droplets. The diameter of the very fine particles or droplets is comprised between 0.5 and 250 micrometres, preferably smaller than 100 micrometres, for example 10 micrometres, 25 micrometres, etc, which ensures a good and even distribution of the droplets along the entire area of the patterned stencil cut-out 302. When the very fine particles or droplets of the edible compound 102 come in contact with the mould 200 and the patterned stencil layer 300, the sprayed edible compound pattern 101 adheres to the mould 200 and a transition from the liquid state of the sprayed edible compound 102 to the solid state of the sprayed edible compound 102 is initiated. In this way a sprayed edible compound pattern 101 is formed on the mould 200 with a thickness 104 in the range of for example 0.1mm to 0.3mm. According to alternative embodiments, the spraying nozzle 2 can comprise a moisture trap to prevent droplets of condensation from mixing with the air that is propelling the sprayed edible compound in its liquid state 102, such as known from the pistol-triggered style airbrush HP-TR1 manufactured by Iwata-Medea. Other suitable spraying nozzles are for example marketed as the LM45 electric food sprayer for chocolate manufactured by Krebs Switzerland, or the Badger 350 manufactured by Badger Air-Brush Co..

As shown in Fig. 4B, it is no problem when an excess of sprayed edible compound in liquid state 102 is collected on the rims 305 of the patterned stencil layer 300. In this way the patterned chocolate product 100 is not affected by the alignment of the spraying nozzle with the patterned stencil cut-out 302 as any excess of sprayed edible compound 102 is not deposited on the mould 100. In order to prevent adhesion from the sprayed edible compound pattern 101 on the mould 100 to the excess of sprayed edible compound 102 on the patterned stencil layer 301, preferably, as shown in the cross-section of Fig. 4C, the predefined thickness threshold for the stencil layer 300 is such that it is greater than the thickness 104 of the sprayed edible compound pattern 101 formed on the mould 200.

According to a next step of the manufacturing method of the patterned chocolate product 100 shown in Fig. 5A, the patterned stencil layer 300 is removed from the non-planar cast shape 202 of the mould 200, leaving the sprayed edible compound pattern 101 in the non-planar cast shape 202 of the mould 200. The rims 305 of the patterned stencil layer 300 also prevent any excess of sprayed edible compound 102 from being left present on the top planar surface 201 of the mould 200, when the patterned stencil layer 300 is removed from the non-planar cast shape 202 of the mould 200, as visible in Fig. 5B.

As shown in the cross-section depicted in Fig. 5C, the sprayed edible compound pattern 101 sets on the mould 200 at the exact position defined by the patterned stencil cut-out 302 of the patterned stencil layer 300 when the patterned stencil layer 300 is positioned in the non-planar cast shape 202 of the mould 200. When the thickness of the patterned stencil layer 300 is greater than the thickness 104 of the sprayed edible compound pattern 101 in the non-planar cast shape 202 of the mould 200, the sprayed edible compound pattern 101 will not attach to any excess of sprayed edible compound 102. Hence, it is not damaged during the removal of the patterned stencil layer 300 from the mould 200. Additionally as the contact surface of the sprayed edible compound pattern 101 with the mould 100 is much larger than the contact surface of the edges of the relatively thin sprayed edible compound pattern 101 with the patterned stencil layer 300, the adhesion forces generated by contact with the mould 100 will be larger than those with the patterned stencil layer 300, thus reducing the risk of removal of the sprayed edible compound pattern 101 from the mould 100 during removal of the patterned stencil layer 300 after the spraying operation.

According to a further step of the method shown in Fig. 6A, a chocolate compound in its liquid state 103 is cast in the non-planar cast shape 202 of the mould 200, thereby covering said sprayed edible compound pattern 101, as visible in Fig. 6B. The chocolate compound in its liquid state 103 is characterized in that its colour is different from the colour of the sprayed edible compound pattern 101. Such a chocolate compound comprises for instance a mixture obtained from cocoa products and sugars, derived from dry cocoa solids, including cocoa butter and dry non-fat cocoa solids. As shown the chocolate compound 103 completely covers the non-planar cast shape 202 of the mould 200, until it reaches the top planar surface 201. Subsequently any excess of the chocolate compound 103 is removed from the mould 200. According to an alternative embodiment, the non-planar cast shape 202 of the mould 200 can be completely filled with the chocolate compound in its liquid state 103 until the chocolate compound reaches the top planar surface 201 of the mould 200. According to a further alternative embodiment, the non-planar cast shape 202 of the mould 200 in which the chocolate compound in its liquid state 103 has been cast can be filled with an edible compound, until the edible compound reaches the top planar surface 201 on the mould 200. According to alternative embodiments, for example in the case where the colour of the sprayed edible compound pattern 101 is paler than the colour of the chocolate compound 103, white chocolate is sprayed on the first sprayed layer forming the edible compound pattern 101 when sufficiently crystallized on the mould 200 through the patterned stencil cut-out 302 of the patterned stencil layer 300, when the patterned stencil shape 301 is positioned in the non-planar cast shape 202 of the mould 200, thereby creating a second sprayed layer of white chocolate. This way, the second sprayed layer of white chocolate acts as a background layer for the edible compound pattern 101 and prevents the fact that the chocolate compound 103 covering the edible compound pattern 101 can be seen through the paler edible compound pattern 101 once the final chocolate product 100 is unmoulded from the mould 200. White chocolate comprises a mixture of cocoa butter, sugar, milk solids and salt, and is derived from the fatty content of the solids of the cocoa bean. According to alternative embodiments, any other suitable and sprayable compound could be sprayed to form the second sprayed layer and could be used as a background layer for the first sprayed layer forming the edible compound pattern 101. According to further alternative embodiments, any suitable plurality of sprayed layers could act as a background for the first layer forming the edible compound patter 101, such as for example 3, or 4, etc.

According to an embodiment shown in the cross-section depicted in Fig. 6C, the chocolate compound in its liquid state 103 is allowed to set in the non-planar shape 202 of the mould 200, while covering the sprayed edible compound pattern 101, thereby creating the chocolate product 100. It is clear that according to this embodiment the chocolate compound in its liquid state 103 is cast that such that the surface of the chocolate product 100 in contact with the mould 200 will be in line with said sprayed edible compound pattern 101. This means that there will be no discontinuity, such as for example a step or protrusion, available on the surface of the chocolate product 100 at the edges of the sprayed edible compound pattern 101.

According to a subsequent step of the method shown in Fig. 7A, the chocolate product 100 comprising a sprayed edible compound pattern 101 and a chocolate compound 103 is unmoulded. The sprayed edible compound pattern 101 is in line with the chocolate compound 103 cast in the mould 200. The final shining, glossy and smooth effect of the chocolate product 100 is ensured as both the surface of the sprayed edible compound pattern 101 and of the chocolate compound 103 forming the outer surface of the chocolate product 100 have been in contact with the mould 100. In the cross-section depicted in Fig. 7B, the chocolate product 100 is characterized in that the colour of the chocolate compound 103 is different than the colour of the sprayed edible compound pattern 101.

According to an alternative embodiment shown in Fig. 8A, one further patterned stencil layer 310 comprises at least one further patterned stencil shape 311 that matches the non-planar cast shape 202 of the mould 200. Fig. 8B illustrates a cross-section transverse to the top planar surface 201 of the mould 200 along the CC axis of the patterned stencil layer 300 comprising a patterned stencil shape 301, rims 305 and a patterned stencil cut-out 302. Fig. 8C illustrates a cross-section transverse to the top planar surface 201 of the mould 200 along the DD axis of the patterned stencil layer 310 comprising a patterned stencil shape 311, rims 315 and a patterned stencil cut-out 312. A sprayed edible compound pattern 101 is defined by positioning the patterned stencil layer 300 in the non-planar cast shape 202 of the mould 200 and by spraying an edible compound 102 on the mould 200 through the patterned stencil cut-out 302 of the patterned stencil layer 300. A sprayed edible compound pattern 111 is defined by positioning the patterned stencil layer 310 in the non-planar cast shape 202 of the mould 200, thereby covering the sprayed edible compound pattern 101, and by spraying an edible compound 102 on the mould 200 through the patterned stencil cut-out 312 of the patterned stencil layer 310. By consecutively executing the definition of the sprayed edible compound pattern 101 and of the sprayed edible compound pattern 111, the chocolate product 100 is characterized in that it presents at least two in-line patterns, as depicted in perspective view in Fig. 9A and in cross-section view in Fig. 9B. These two in-line patterns can be different in shape and/or can be different in colour. It is also possible to define two identical sprayed edible compound patterns 101 on the mould 200. After defining a first sprayed edible compound pattern 101 on the mould 200, the patterned stencil layer 300 is removed from the non-planar cast shape 202 of the mould 200, rotated with respect to the first position and positioned back in the non-planar cast shape 202 of the mould 200. A second sprayed edible compound pattern 101 can then be defined at a different location on the mould 200 when spraying an edible compound 102 on the mould 200 through the patterned stencil cut-out 302 of the patterned stencil shape 300.

According to an embodiment shown in Fig. 10, a chocolate product 100 is characterized in that it presents one in-line pattern 101 of a different colour than the chocolate 103 forming the chocolate product 100 and that the non-planar shape of the chocolate product 100 that is formed in a corresponding non-planar mould cast shape 202 comprises angled sections. It is clear that alternative shapes for the chocolate product 100 are possible, for instance another part of a sphere, a part of a spheroid, or any other suitable cast receptacle comprising at least one curved section. According to still further alternatives the shapes for the chocolate product 100 could comprise a plurality of angled planes, such as for example shaped as a part of a cube, a part of a parallelepiped, a part of a tetrahedron, dodecahedron, icosahedron, or any other suitable polyhedron, etc. It is clear that alternative shapes for the chocolate product 100 are possible comprising a combination of curved and angled sections, such as a predetermined figurine.

Optionally, the method of forming at least one patterned chocolate product 100 further comprises the step of joining a plurality of patterned chocolate products 100. For example two of the half spheres of the embodiments described above could be joined in order to form a complete hollow sphere. According to alternative embodiments, the chocolate product 100 obtained by joining a plurality of patterned chocolate products 100 can form a complete filled sphere. According to further alternative embodiments, a plurality of patterned chocolate products 100 unmoulded from non-planar cast shapes 202 comprising other curved and/or angled sections, such as cast receptacles for predetermined figurines, could be joined in order to form a complete hollow chocolate product 100. According to alternative embodiments, the chocolate product 100 obtained by joining a plurality of patterned chocolate products 100 with curved and/or angled sections can be completely filled with chocolate compounds 103.

Throughout the specification, the terms "chocolate" or "chocolate compound" are intended to include within their scopes chocolate, chocolate without any additional substances, chocolate substitute, e.g. carob and other substances generally referred to as "fake" chocolate such as "compound chocolate" also known as "compound coating" or "chocolatey coating" and made from a combination of cocoa, vegetable fat, and sweeteners using hard vegetable fats such as coconut oil or palm kernel oil in place of cocoa butter. The terms "chocolate" or "chocolate compound" also cover chocolate-like materials i.e. a mixture obtained from cocoa products and sugars, e.g. a mixture of a food-compatible colorant and cocoa butter, or a mixture of chocolate derived mainly from dry cocoa solids and cocoa butter, or a mixture of a food-compatible colorant and chocolate derived mainly from dry cocoa solids and cocoa butter. The terms "chocolate" or "chocolate compound" further cover a mixture obtained from mixing chocolate derived mainly from dry cocoa solids and cocoa butter with optional additions of lecithin, such as soya lecithin, and/or flavouring compounds, such as for instance vanilla extract or imitation of vanilla extract containing vanillin. The terms "chocolate" or "chocolate compound" further cover what is often referred to as white chocolate, which does not contain cocoa solids but is derived from the fatty content of the solids of the cocoa bean. White chocolate comprises a mixture of cocoa butter, sugar, milk solids such as for example milk powder, and optionally comprises additions of lecithin, such as soya lecithin, and/or additions of flavouring compounds, such as for instance vanilla extract or imitation of vanilla extract containing vanillin.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An assembly (1) for forming at least one patterned chocolate product (100) cast in a mould (200) comprising a non-planar cast shape (202) for each of the at least one patterned chocolate products (100), **CHARACTERIZED IN THAT** said assembly (1) comprises a patterned stencil layer (300), which comprises at least one patterned stencil shape (301) matching said at least one non-planar cast shape (202) of said mould (200), each patterned stencil shape (301) comprising a patterned stencil cut-out (302), and
said patterned stencil layer (300) is configured to be positioned in said mould (200) such that a sprayed edible compound pattern (101) is formed on said non-planar cast shape (202) of said mould (200) when an edible compound in its liquid state (102) is sprayed through said patterned stencil cut-out (302) of said patterned stencil shape (301).

2. An assembly according to claim 1, **characterized in that** said patterned stencil layer (300) extends between a mould face (303) and an opposite product face (304) and said patterned stencil cut-out (302) extends completely through said patterned stencil layer (300) from said mould face (303) to said opposite product face (304).

3. An assembly according to claim 1 or 2, **characterized in that** said mould face (303) of said patterned stencil shape (301) touches said matching non-planar cast shape (202) of said mould (200) when positioned in said mould (200).

4. An assembly according to any of the preceding claims, **characterized in that** the layer thickness (330) of said patterned stencil shape (301) is smaller than a predefined layer thickness threshold.

5. An assembly according to claim 4, **characterized in that** said predefined layer thickness threshold is defined by one or more of the following ranges:
- smaller than 80% of the depth (210) of said mould (200), preferably 50%;
- smaller than 2mm, preferably smaller than 1mm;
- greater than the thickness (104) of said sprayed edible compound pattern (101) when formed on said mould (200).

6. An assembly according to any of the preceding claims, **characterized in that** said patterned stencil layer (300) comprises rims (305) connected to said patterned stencil shape (301), said rims (305) are configured to correctly position said patterned stencil shape (301) in said non-planar cast shape (202) of said mould (200).

7. An assembly according to any of the preceding claims, **characterized in that** said mould (200) comprises a plurality of said non-planar cast shapes (202) and said patterned stencil layer (300) comprises a plurality of said patterned stencil shapes (301) and rims (305).

8. An assembly, according to any of the preceding claims, wherein said assembly (1) further comprises said mould (200).

9. A method of forming at least one patterned chocolate product (100), said method comprising:
- providing a mould (200) comprising at least one non-planar cast shape (202) for each of the at least one patterned chocolate products (100);
- positioning in said mould (200) a patterned stencil layer (300), which comprises at least one patterned stencil shape (301) matching said at least one non-planar cast shape (202) of said mould (200), each patterned stencil shape (301) comprising a patterned stencil cut-out (302); and
- forming a sprayed edible compound pattern (101) on said non-planar cast shape (202) of said mould (200) by spraying an edible compound in its liquid state (102) through said patterned stencil cut-out (302) of said patterned stencil shape (301).

10. A method according to claim 9, wherein the method comprises the further step of allowing said sprayed edible compound pattern (101) to set by a transition from its liquid state to its solid state.

11. A method according to claim 9 or 10, wherein the method comprises the further step of removing said patterned stencil shape (301) of said patterned stencil layer (300) from said non-planar cast shape (202), leaving said sprayed edible compound pattern (101) in said non-planar cast shape (202).

12. A method according to any of the claim 9 to 11, wherein the method comprises the further step of casting a chocolate compound in its liquid state (103) in said non-planar cast shape (202), thereby covering said sprayed edible compound pattern (101).

13. A method according to any of the claims 9 to 12, wherein said edible compound (102) is sprayed on said mould (200) with use of compressed air (2), where the edible compound (102) is sprayed in form of droplets with a diameter between 0.5 and 250 micrometres, preferably with a diameter lower than 100 micrometres.

14. A method according to any of the claims 9 to 13, wherein said chocolate compound (103) is cast such that the surface of said chocolate product (100) in contact with the mould is in line with said sprayed edible compound pattern (101).

15. A method according to any of the claims 9 to 14, wherein it comprises the further steps of:
- positioning in said mould (200) a further patterned stencil layer (310), which comprises at least one further patterned stencil shape (311) matching said at least one non-planar cast shape (202) of said mould (200), each further patterned stencil shape (311) comprising a further patterned stencil cut-out (312); and
- forming a further sprayed edible compound pattern (111) on said non-planar cast shape (202) of said mould (200) by spraying a further edible compound in its liquid state (102) through said further patterned stencil cut-out (312) of said further patterned stencil shape (311).
